# EUROPEAN PATENT SPECIFICATION

(11) **EP 2 621 101 B1**
(45) Date of publication and mention of the grant of the patent: **26.04.2017**
(21) Application number: 12152970.5
(22) Date of filing: 27.01.2012
(51) Int. Cl.: H04B 5/02

(54) **Mobile wireless communications system including selectively coupled pair of discontinuous nfc circuit segments and related methods**
Mobiles drahtloses Kommunikationssystem mit einem selektiv gekoppelten Paar diskontinuierlicher NFC-Schaltungssegmente und zugehörige Verfahren
Système de communication mobile sans fil incluant une paire couplée de manière sélective de segments de circuit nfc discontinu et procédés associés

(43) Date of publication of application: 31.07.2013
(73) Proprietor: BlackBerry Limited, Waterloo, ON N2K 0A7 (CA)
(72) Inventor: Aldana, Leonardo, Waterloo, Ontario N2L 3W8 (CA); Simoes, Felipe Oliveira, Waterloo, Ontario N2L 3W8 (CA)
(74) Representative: Noble, Nicholas

(56) References cited:
- EP-A1- 2 306 369
- US-A1- 2006 084 392
- US-A1- 2010 176 934

## Description

### Technical Field

The present disclosure generally relates to the field of communications, and more particularly, to wireless communications systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.

### Brief Description of the Drawings

FIG. 1 is a schematic block diagram of a wireless communication system including an adjacent NFC device in accordance with an example embodiment.
FIG. 2 is a schematic diagram of an adjacent NFC device in the form of an NFC tag in accordance with an example embodiment.
FIG. 3 is a schematic diagram of an NFC tag in accordance with another embodiment.
FIG. 4 is a schematic diagram of an NFC tag in accordance with another embodiment.
FIG. 5 is a schematic diagram of an NFC device in the form of a carrying case in accordance with an example embodiment.
FIG. 6 is a schematic diagram of a carrying case in accordance with another embodiment.
FIG. 7 is a schematic diagram of a carrying case in accordance with another embodiment.
FIG. 8 is a schematic diagram of a carrying case in accordance with another embodiment.
FIG. 9 is a schematic block diagram illustrating additional components of that may be included in the mobile wireless communications device of FIG. 1.

### Detailed Description

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

In accordance with an example embodiment, a mobile wireless communications system may include a mobile wireless communications device including a portable housing, a wireless transceiver carried by the portable housing, and a processor carried by the portable housing and coupled to the wireless transceiver. The mobile wireless communications system may further include a near-field communication (NFC) device coupled to the processor. The system may include an adjacent NFC device configured to communicate directly with the mobile wireless communications device. The adjacent NFC device may include a plurality of pairs of discontinuous NFC circuit segments, and a respective switch assembly configured to selectively coupled each pair of discontinuous NFC circuit segments to establish NFC communication with the NFC device, for example.

Each pair of discontinuous NFC circuit segments may include a pair of discontinuous conductive traces, for example. Each pair of discontinuous NFC circuit segments may include a pair of discontinuous NFC antenna segments.

The at least one switch assembly may further include at least one NFC controller, for example. The at least one switch assembly may include a plurality thereof, and the at least one NFC controller may include a respective NFC controller for each switch assembly and having a different function associated therewith.

The adjacent NFC device may further include a substrate carrying the plurality of pairs of discontinuous NFC circuit segments and the at least one switch assembly, for example. The adjacent NFC device may include a carrying case configured to carry the mobile wireless communications device. The NFC communications circuitry may be embedded within the carrying case, and the at least one switch assembly may carried by an exposed surface of the carrying case, for example.

A method aspect is directed to a method of establishing NFC communication with a mobile wireless communications device that may include a portable housing, a wireless transceiver carried by the portable housing, a processor carried by the portable housing and coupled to the wireless transceiver, and a near-field communication (NFC) device coupled to the processor. The method may include using an adjacent NFC device to communicate directly with the mobile wireless communications device by operating a respective switch assembly to selectively couple each pair of a plurality of pairs of discontinuous NFC circuit segments to establish NFC communication with the NFC device, for example.

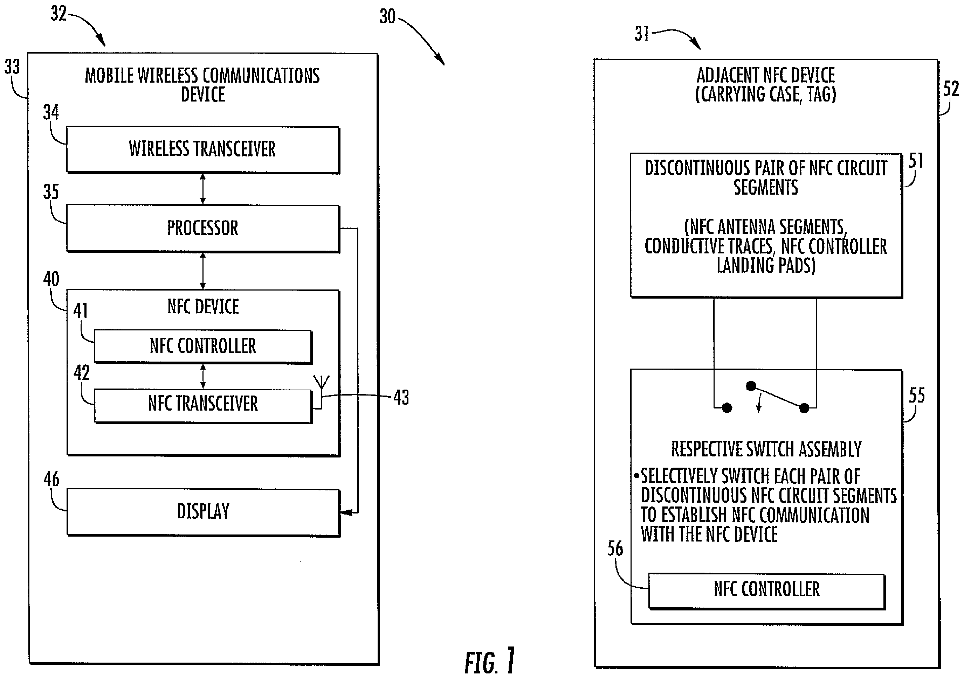

Referring initially to FIG. 1, a mobile wireless communications system **30** illustratively includes a mobile wireless communications device **32** (also referred to as a "mobile device" herein). Example mobile wireless communications devices may include portable or personal media players (e.g., music or MP3 players, video players, etc.), portable gaming devices, portable or mobile telephones, smartphones, tablet computers, digital cameras, etc.

The mobile device **32** illustratively includes a portable housing **33** and a wireless transceiver **34** carried by the portable housing **33**. The wireless transceiver **34** may comprise a cellular transceiver or other type of wireless communications transceiver, and may communicate any combination of voice and data, such as, for example, email.

The mobile device **32** includes a display **46** carried by the portable housing **33**. The display **46** may comprise a liquid crystal display (LCD) and may be configured to display information relating to data or voice communications. The display **46** may be in the form of an active display that includes a backlight, for example. The display **46** may display email information, contact information, or call information. The display **46** may be another type of display, for example, a passive display, and may display other information.

The mobile device **32** also includes a processor **35** that is carried by the portable housing **33** and coupled with the wireless transceiver **34** and the display **46**. The processor **35** may be implemented using hardware (e.g., memory, etc.) and software components, i.e., computer-readable instructions for causing the mobile device **32** to perform the various functions or operations described herein.

The mobile device **32** also includes a NFC device **40** carried by the portable housing **33** and coupled with the processor **35**. The NFC device **40** includes a NFC controller **41** and a NFC transceiver **42** coupled with the NFC controller **41**.

The NFC device **40** also includes an NFC antenna **43** carried by the portable housing **33**. Of course, more than one NFC antenna may be carried by the portable housing **33** and coupled to the NFC transceiver **42**.

The NFC controller **41**, the NFC transceiver **42**, and the NFC antenna **43** advantageously cooperate to perform at least one NFC communication function. For example, the NFC device **40** may communicate directly with an adjacent NFC device **31** that is part of the communications system **30** based upon proximity thereto using NFC communication.

The adjacent NFC device **31** is configured to communicate directly with the mobile wireless communications device **32**. In other words, there are no intermediate devices or antennas, for example, to expand the range of communications between the NFC device **40** and the adjacent NFC device **31**. In some embodiments, the adjacent NFC device **31** may be an NFC tag, an NFC-enabled mobile device, a carrying case, a smart poster, etc.

By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

As will be appreciated by those skilled in the art, adjacent NFC devices or NFC tags may be very discrete with respect to size, for example, thickness. However, there may be instances where a larger adjacent NFC device or tag may be desired to have a larger coupling range with the NFC antenna on the mobile wireless communications device. The mobile device or surface thereof where the relatively large adjacent NFC device or tag is to be mounted may be too small, or the process to make it may not permit placement of the adjacent NFC device or tag as desired. In some instances, it may not cosmetically acceptable or the adjacent NFC device may be on an exposed surface of the mobile device, which may make it subject to wear and tear by normal use. Additionally, it may be desirable to place an adjacent NFC device **31** in proximity to the NFC antenna **43**, but there are a limited number of instances where NFC communication is to be triggered by some external way to cause a specific effect on the mobile device, for example.

The adjacent NFC device **31** includes a pair of discontinuous NFC circuit segments **51** carried by a substrate **52**. The adjacent NFC device **31** also includes a respective switch assembly **55** carried by the substrate **52** and configured to selectively couple the pair of discontinuous NFC circuit segments **51** to establish NFC communication with the NFC device **40**. The discontinuous NFC circuit segments **51** may be in the form of a discontinuous NFC antenna segments, and/or discontinuous conductive traces, for example. The discontinuous NFC circuit segments **51** may be in the form of other discontinuous circuit portions, as will be appreciated by those skilled in the art.

In some embodiments, the respective switch assembly **55** may include an NFC controller **56**. In other words, the NFC controller **56** may selectively couple the discontinuous NFC circuit segments **51** to establish NFC communication with the NFC device **40**. The type of NFC communication or specific commands or instructions communicated to the NFC device **40** may be based upon the NFC controller **56**, for example.

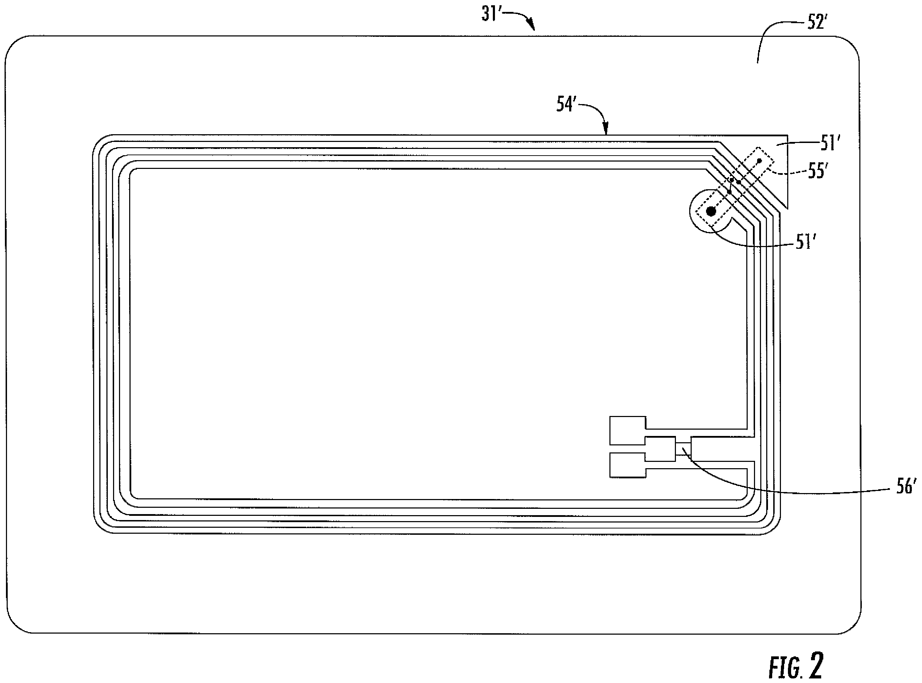

Referring now to FIG. 2, the adjacent NFC device **31'** may be in the form of an NFC tag and may be configured to have an NFC antenna **54'** printed, etched, pasted or placed with any other method onto the substrate **52'**. The substrate **52'** may be a film or PCB, for example.

On the same surface of the substrate **52',** an NFC controller **56'** in the form of an integrated circuit, may be electrically coupled, for example, by soldering to landing pads on the NFC antenna **54'**. The NFC controller **56'** stores information and executes instructions for direct communications with the NFC device **40'** of the mobile device **32'** when in proximity thereto.

Because the NFC antenna **54'** generally has a spiral shape, it may not be possible to close the loop on the same plane or side of the substrate **52'**. Thus, in a typical adjacent NFC device or tag, the two ends may be coupled with a jumper, which bridges over the NFC antenna, for example, on the other surface of the substrate. This closes the loop of the NFC antenna so it may operate as such. Other techniques may be used in typical adjacent NFC devices to close the loop of the NFC antenna, such as, for example, crimping, and thru holes with conductive material soldered or pasted to the conductive material on each end.

In contrast, in the present embodiments, the adjacent NFC device **31** illustratively includes a pair discontinuous NFC antenna segments **51'**, where the jumper noted above would typically be placed. Instead, a respective switch assembly **55'** selectively couples each pair of discontinuous NFC antenna elements **51'** to establish NFC communication with the NFC device **40'.** In other words, the bridge or jumper noted above is decoupled and the switch assembly **55'** in the form of an external jumper is used to close the NFC antenna **54'** when NFC communications with the NFC device **40'** are desired. This way, the adjacent NFC device **31'** or tag can be in proximity to the mobile device **32'** and can be triggered by the switch assembly **55'**.

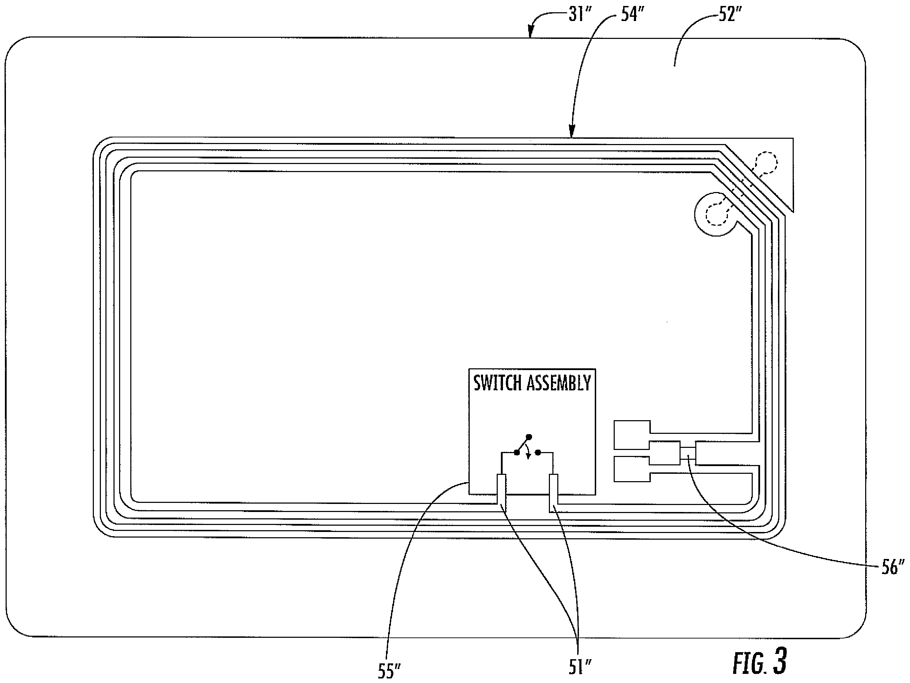

Referring now to FIG. 3, in another embodiment, the adjacent NFC device **31"** illustratively includes a pair of discontinuous conductive traces **51"**. A respective switch assembly **55"** selectively couples the pair of discontinuous conductive traces **51"** to establish NFC communication with the NFC device **40"**. In other words, a segment from one of the conductive traces is removed or decoupled, and the switch assembly **55"**, in the form of an external jumper, for example, selectively couples the discontinuous conductive traces **51"** or closes the circuit or loop. In some embodiments, the switch assembly **55"** may include an exposed long decorative conductive strip or a hidden conductor with two exposed pins to complete the connection to the NFC antenna **54"**, for example.

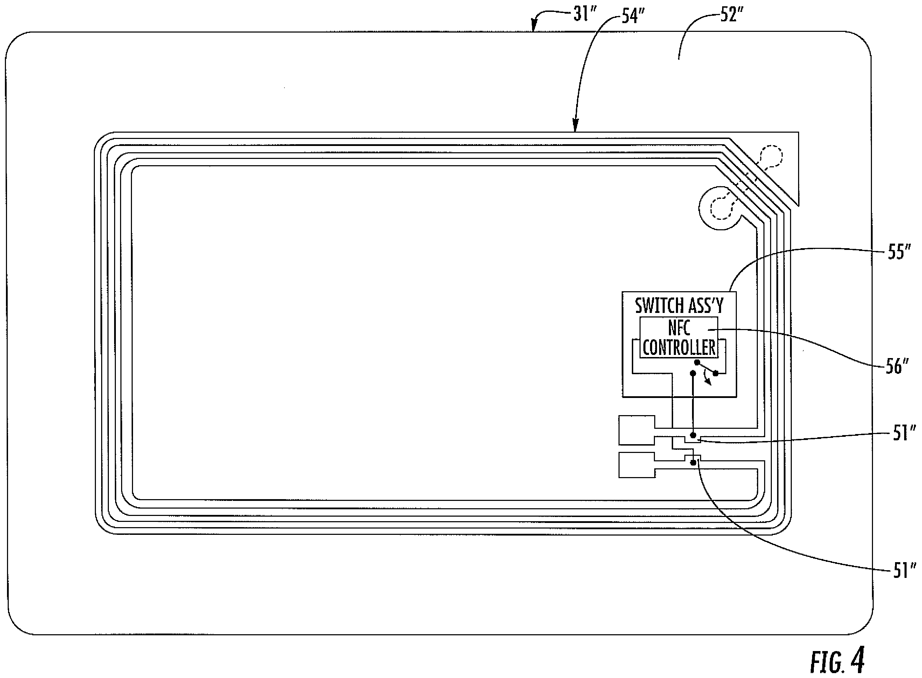

Referring now to FIG. 4, in another embodiment, the adjacent NFC device **31"'** illustratively includes a pair discontinuous landing pads **511"'** for the NFC controller **56"'**. A respective switch assembly **55"'**, which include the NFC controller **56"'** selectively couples each pair of discontinuous conductive NFC controller landing pads **51"'** to establish NFC communication with the NFC device **40"'**. In other words, the NFC controller **56"**' is decoupled, and may be considered part of the switch assembly **55"'**, i.e., carried by a pushbutton. As will be appreciated by those skilled in the art, a different switch assembly **55"'** and respective NFC controller **56"'** may be used with the same NFC antenna **54"'**, each having a different NFC code or instructions for sending to the NFC device **40"**.

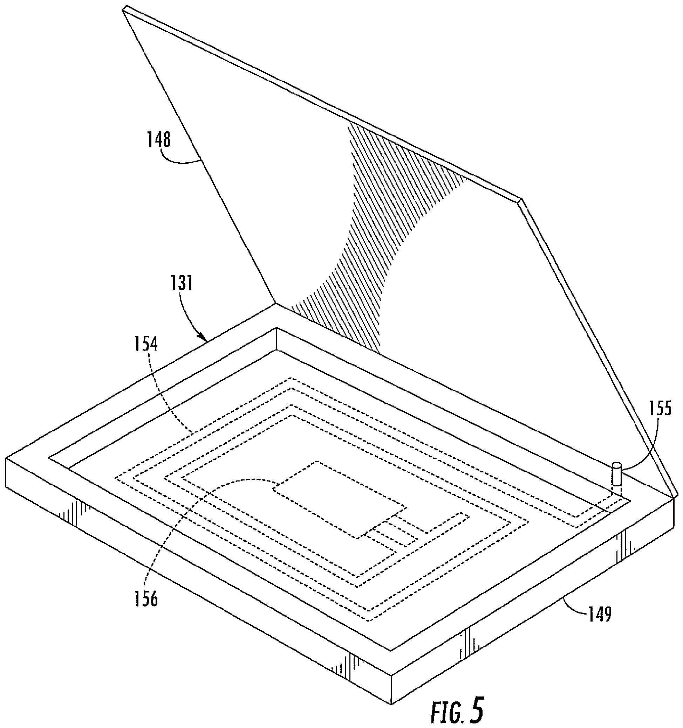

Referring now to FIG. 5, in yet another embodiment, the adjacent NFC device **131** is illustratively in the form of a carrying case, i.e., an accessory, configured to carry the mobile wireless communications device. For example the carrying case may be a protective case and include a housing **149** or body portion for receiving the mobile wireless communications device therein, and a lid **148** for covering the mobile device. In some embodiments, the carrying case **131** may be in the form of a removable cover or lid, and may not include the body portion **149**.

The NFC circuit elements of the carrying case **131**, including the NFC antenna **154** and NFC controller **156**, may be embedded in between the layers of the case. The switch assembly **155** may be carried by an exposed surface of the carrying case **131**, for example. This arrangement may be particularly advantageous for using the carrying case **131**, to place the mobile device in a sleep mode, for example, based upon the position of the carrying case lid **148**. The switch assembly **155** is part of the lid **148**, which may be in the form of a decorative strip, protruding connectors, or a logo defining contact points. Closing the lid **148** would cause the switch assembly **155** to close the NFC antenna **154** and hence the NFC antenna becomes active sending corresponding information to the mobile device to put it in a sleep mode. Of course, other information may be sent to the mobile device to cause other actions to be performed. When the lid **148** is lifted the switch assembly **155** causes to the NFC antenna **154** to be in an open circuit configuration again, and the mobile device wakes up.

This may be particularly advantageous because the NFC antenna **154** is generally not on the flexible side of the carrying case **131**, i.e., lid **148**, where it can be folded or bent causing conductive traces to crack. Additionally, the NFC antenna **154** may be as large as desired taking advantage of the footprint under the mobile device, which may be relatively large when the mobile device is in the form of a tablet PC, for example. Still further, the lid **148** can be folded for use without putting the mobile device to sleep.

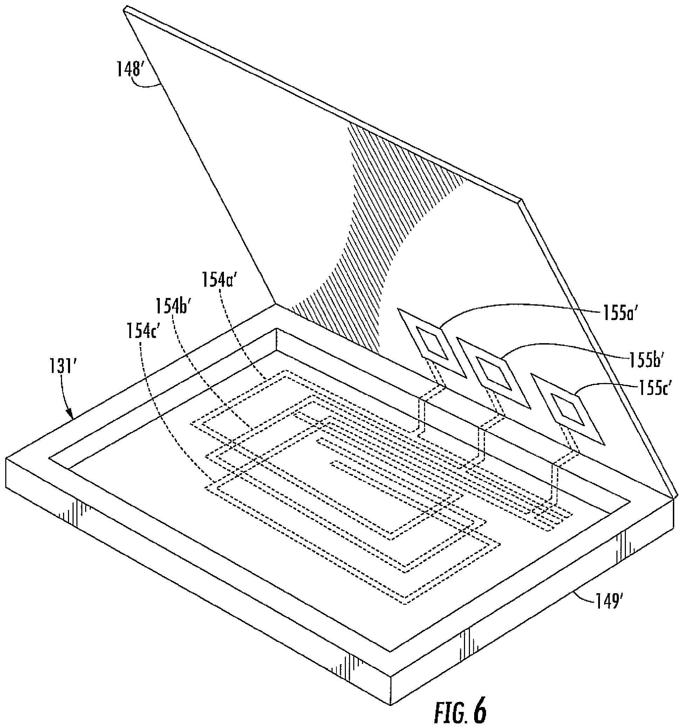

Referring now to FIG. 6, in another embodiment, multiple different NFC antennas **154a'-154c'** may be embedded in the adjacent NFC device **131'** or carrying case. Illustratively, there are three NFC antennas **154a'-154c'** that are in a stacked relation and embedded. Of course, any number of NFC antennas **154'** may be used, some or all may be embedded and/or carried by other parts of the carrying case **131'**. Each of the three NFC antennas **154a'-154c'** has a respective switch assembly **155a'-155c'** and NFC controller associated therewith. Each switch assembly **155'**, upon coupling the respective NFC antenna **155'** causes different behaviors on the mobile device. In other words, one carrying case **131'** may have two or more NFC antennas which can be configured on the mobile device to act as quick access buttons. These buttons may be used as extensions of the mobile device without using other wireless communications protocols, for example, Bluetooth, or other protocols that may be more strictly regulated, that may be left open for other applications, or that consume too much power.

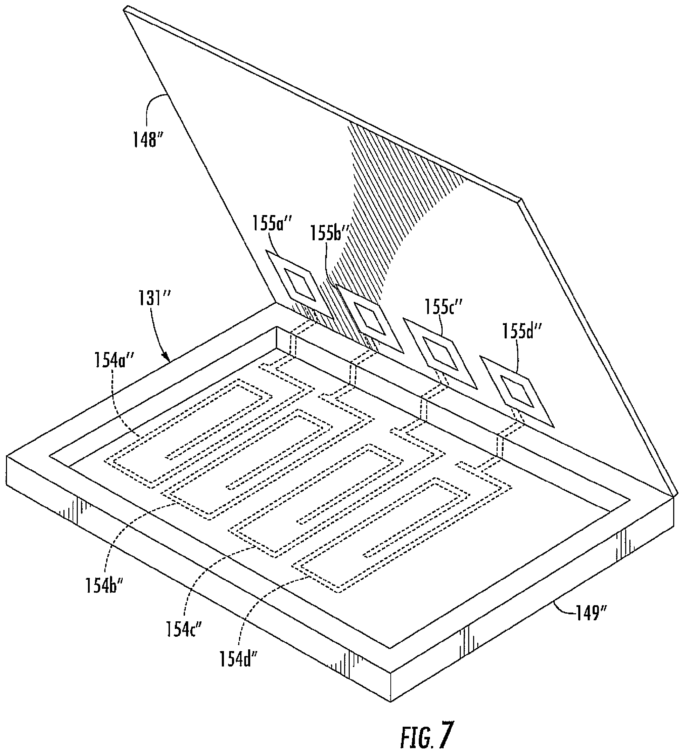

Referring now to FIG. 7, in another embodiment, multiple NFC antennas **156"** may be configured for different NFC communications functions. This embodiment, is similar to the embodiment describe above with respect to FIG. 6, but each switch assembly **155a" -155d"** triggers a respective relatively small sized NFC antenna **154a" -154d".** The NFC antennas **154a"-154d"** are arranged in side-by-side relation. The mobile device is large enough to capture the signal for any of the NFC antennas **154a" -154d"** when the respective switch assembly **155a"-155d"**, or button, is activated. One switch assembly **155"** or button may instruct the mobile device to activate the browser, while another switch assembly may activate a camera, etc.

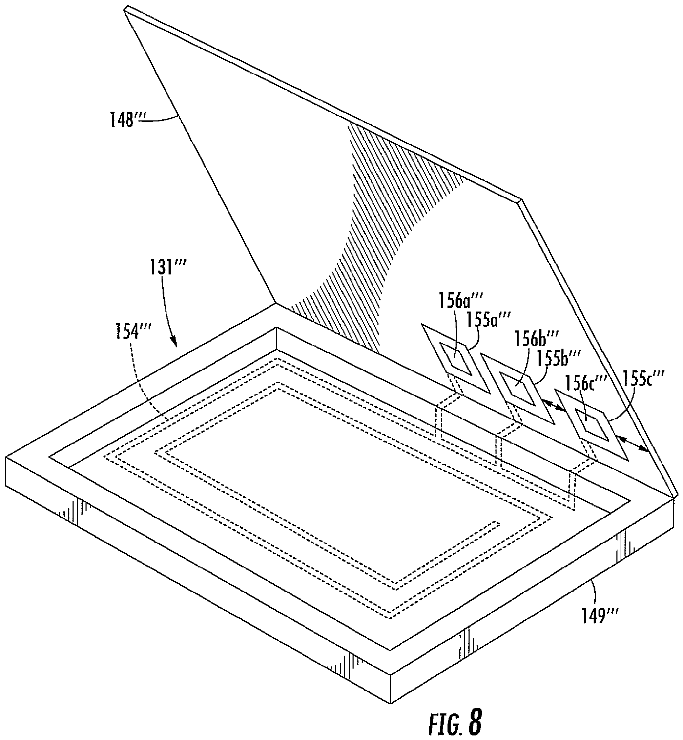

Referring now to FIG. 8, a single NFC antenna **154"'** may be coupled to a plurality of different switch assemblies **155a"'-155c"'.** For example, each switch assembly **155"'** may be removable or movable so that a different NFC controller **156"**' may be included or integrated into each switch assembly. Each NFC controller **156a"**'**-156c"'** has a different command or instruction set associated therewith and activates the NFC antenna **154"'** with the different commands. Additionally, each NFC controller **156"'** may have web links, a music album, a movie, and/or an e-book associated therewith. A user, for example, may purchase each switch assembly **155"'** with the corresponding NFC controller **156"**' at a store or on-line. Each switch assembly **155"'** may be traded, for example, with other users using the same type of carrying case **131"'**.

While the switch assemblies **155** described with respect to FIGS. 6-8 above are carried by the lid **148**, and the NFC antennas **154** carried by the body portion **149** it should be understood that any number of the NFC antennas **154** and the switch assemblies may be carried by the lid, body, or by other parts of the carrying case **131**. For example, the switch assemblies **155** may not be carried by the lid **148**, and/or the NFC antennas **154** may be carried by the lid. Moreover, while adjacent NFC device **131** has been described with respect to a carrying case, it should be understood that the adjacent NFC device may define an accessory for the mobile device, for example, a cover, a carrying case, a holster, a cradle, a workstation, or other stationary device, for example, at a kiosk.

As will be appreciated by those skilled in the art, the adjacent NFC device **31** described herein, i.e., the carrying case and the tag, generally does not require a power source, such as, for example, a battery. Moreover, any of the above configurations or embodiments may be used alone or in combination with others to achieve a desired function. The discontinuity of the NFC circuit segments may be formed in any number of places or positions in the NFC circuitry, and the implementation of the connection between the switch assembly **55** and the NFC antenna **54** may depend on the type and size of the mobile device **32**.

Additionally, it may be understood that there may be certain challenges, such as tuning the NFC antenna **54** to a switch assembly **55** that has different cross-sectional sizes and shapes than the conductive traces. Mitigation of dust and moisture may be also be desired, as will be appreciated by those skilled in the art, based upon a given application.

A method aspect is directed to a method of establishing NFC communication with an mobile wireless communications device **32** that includes a portable housing **33**, a wireless transceiver **34** carried by the portable housing, a processor **35** carried by the portable housing and coupled to the wireless transceiver, and a near-field communication (NFC) device **40** coupled to the processor. The method includes using an adjacent NFC device **31** to communicate directly with the mobile wireless communications device **32** by operating a respective switch assembly **55** to selectively couple each pair of a plurality of pairs of discontinuous NFC circuit segments **51** to establish NFC communication with the NFC device **40**.

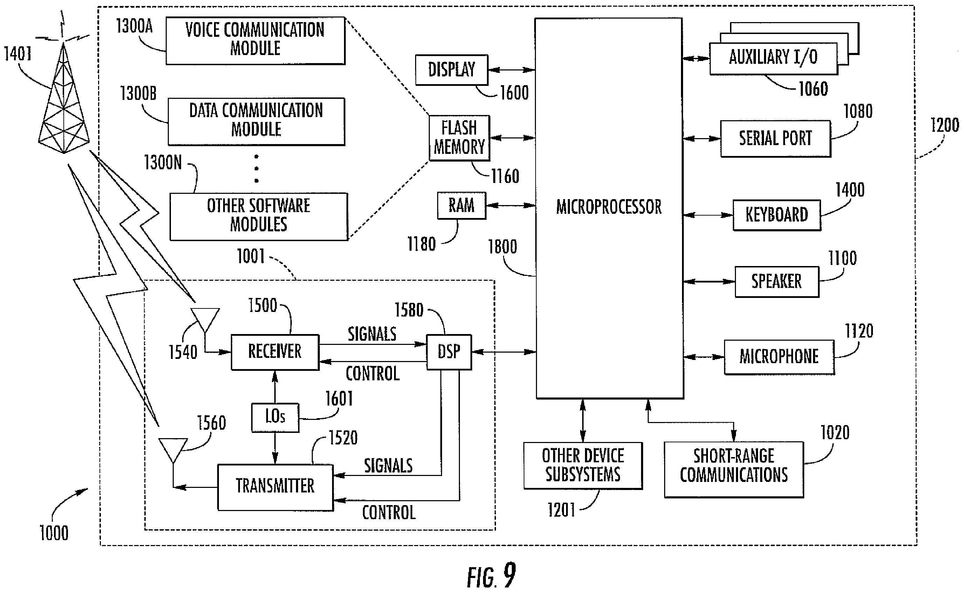

Example components of a mobile wireless communications device **1000** that may be used in accordance with the above-described embodiments are further described below with reference to FIG. 9. The device **1000** illustratively includes a housing **1200**, a keyboard or keypad **1400** and an output device **1600**. The output device shown is a display **1600**, which may comprise a full graphic LCD. Other types of output devices may alternatively be utilized. A processing device **1800** is contained within the housing **1200** and is coupled between the keypad **1400** and the display **1600**. The processing device **1800** controls the operation of the display **1600**, as well as the overall operation of the mobile device **1000**, in response to actuation of keys on the keypad **1400**.

The housing **1200** may be elongated vertically, or may take on other sizes and shapes (including clamshell housing structures). The keypad may include a mode selection key, or other hardware or software for switching between text entry and telephony entry.

In addition to the processing device **1800**, other parts of the mobile device **1000** are shown schematically in FIG. 9. These include a communications subsystem **1001**; a short-range communications subsystem **1020**; the keypad **1400** and the display **1600**, along with other input/output devices **1060**, **1080**, **1100** and **1120**; as well as memory devices **1160**, **1180** and various other device subsystems **1201**. The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160**, but may be stored in other types of memory devices, such as a read only memory (ROM) or similar storage element. In addition, system software, specific device applications, or parts thereof, may be temporarily loaded into a volatile store, such as the random access memory (RAM) **1180**. Communications signals received by the mobile device may also be stored in the RAM **1180**.

The processing device **1800**, in addition to its operating system functions, enables execution of software applications **1300A-1300N** on the device **1000**. A predetermined set of applications that control basic device operations, such as data and voice communications **1300A** and **1300B**, may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401**. The PIM data items may be seamlessly integrated, synchronized and updated via the wireless network **1401** with corresponding data items stored or associated with a host computer system.

Communication functions, including data and voice communications, are performed through the communications subsystem **1001**, and possibly through the short-range communications subsystem. The communications subsystem **1001** includes a receiver **1500**, a transmitter **1520**, and one or more antennas **1540** and **1560**. In addition, the communications subsystem **1001** also includes a processing module, such as a digital signal processor (DSP) **1580**, and local oscillators (LOs) **1601**. The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000**. The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401**. Signals received from the communications network **1401** by the antenna **1540** are routed to the receiver **1500**, which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560**.

In addition to processing communications signals, the DSP **1580** provides for control of the receiver **1500** and the transmitter **1520**. For example, gains applied to communications signals in the receiver **1500** and transmitter **1520** may be adaptively controlled through automatic gain control algorithms implemented in the DSP **1580**.

In a data communications mode, a received signal, such as a text message or web page download, is processed by the communications subsystem **1001** and is input to the processing device **1800**. The received signal is then further processed by the processing device **1800** for an output to the display **1600**, or alternatively to some other auxiliary I/O device **1060**. A device may also be used to compose data items, such as e-mail messages, using the keypad **1400** and/or some other auxiliary I/O device **1060**, such as a touchpad, a rocker switch, a thumb-wheel, or some other type of input device. The composed data items may then be transmitted over the communications network **1401** via the communications subsystem **1001**.

In a voice communications mode, overall operation of the device is substantially similar to the data communications mode, except that received signals are output to a speaker **1100**, and signals for transmission are generated by a microphone **1120**. Alternative voice or audio I/O subsystems, such as a voice message recording subsystem, may also be implemented on the device **1000**. In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile wireless communications system (30) comprising:
a mobile wireless communications device (32) comprising
a portable housing (33),
a wireless transceiver (34) carried by said portable housing,
a processor (35) carried by said portable housing and coupled to said wireless transceiver, and
a near-field communication, NFC, device (40) coupled to said processor;
an adjacent NFC device (31) configured to communicate directly with said mobile wireless communications device and comprising
a plurality of pairs of discontinuous NFC circuit segments (51), and
a respective switch assembly (55) configured to selectively couple each pair of discontinuous NFC circuit segments to establish NFC communication with said NFC device.

2. The mobile wireless communications system of Claim 1, wherein each pair of discontinuous NFC circuit segments comprises a pair of discontinuous conductive traces (51").

3. The mobile wireless communications system of Claim 1, wherein each pair of discontinuous NFC circuit segments comprises a pair of discontinuous NFC antenna segments (51').

4. The mobile wireless communications system of Claim 1, wherein said at least one switch assembly further comprises at least one NFC controller.

5. The mobile wireless communications system of Claim 4, wherein said at least one switch assembly comprises a plurality thereof; and wherein said at least one NFC controller comprises a respective NFC controller (56) for each switch assembly and having a different function associated therewith.

6. The mobile wireless communications system of Claim 1, wherein said adjacent NFC device further comprises a substrate (52) carrying said plurality of pairs of discontinuous NFC circuit segments and said at least one switch assembly.

7. The mobile wireless communications system of Claim 1, wherein said adjacent NFC device comprises a carrying case (131) configured to carry said mobile wireless communications device.

8. The mobile wireless communications system of Claim 7, wherein said NFC communications circuitry is embedded within said carrying case, and wherein said at least one switch assembly is carried by an exposed surface of said carrying case.

9. An accessory for an adjacent mobile wireless communications device (32) comprising a portable housing (33), a wireless transceiver (34) carried by the portable housing, a processor (35) carried by the portable housing and coupled to the wireless transceiver, and a near-field communication, NFC, device (40) coupled to the processor, the accessory comprising:
a plurality of pairs of discontinuous NFC circuit segments (51); and
a respective switch assembly (55) configured to selectively couple each pair of discontinuous NFC circuit segments to establish direct NFC communication with the NFC device.

10. The accessory of Claim 9, wherein each pair of discontinuous NFC circuit segments comprises a pair of discontinuous conductive traces (51").

11. The accessory of Claim 9, wherein each pair of discontinuous NFC circuit segments comprises a pair of discontinuous NFC antenna segments (51').

12. The accessory of Claim 9, wherein said at least one switch assembly comprises a plurality thereof; and wherein said at least one NFC controller comprises a respective NFC controller (41) for each switch assembly and having a different function associated therewith.

13. The accessory of Claim 9, further comprising a substrate (52) carrying said plurality of pairs of discontinuous NFC circuit segments and said at least one switch assembly.

14. The accessory of Claim 9, further comprising a housing (149) defining a carrying case (131) configured to carry the mobile wireless communications device.

15. A method of establishing NFC communication with a mobile wireless communications device (32) comprising a portable housing (33), a wireless transceiver (34) carried by the portable housing, a processor (35) carried by the portable housing and coupled to the wireless transceiver, and a near-field communication, NFC, device (40) coupled to the processor, the method comprising:
using an adjacent NFC device to communicate directly with the mobile wireless communications device by operating a respective switch assembly (55) to selectively couple each pair of a plurality of pairs of discontinuous NFC circuit segments to establish NFC communication with the NFC device.

## Patentansprüche

1. Ein mobiles drahtloses Kommunikationssystem (30), das aufweist:
eine mobile drahtlose Kommunikationsvorrichtung (32), die aufweist
ein tragbares Gehäuse (33),
einen drahtlosen Transceiver (34), der durch das tragbare Gehäuse getragen wird,
einen Prozessor (35), der durch das tragbare Gehäuse getragen wird und mit dem drahtlosen Transceiver gekoppelt ist, und
eine Nahfeldkommunikation(NFC - near-field communication)-Vorrichtung (40), die mit dem Prozessor gekoppelt ist;
eine angrenzende NFC-Vorrichtung (31), die konfiguriert ist zum direkten Kommunizieren mit der mobilen drahtlosen Kommunikationsvorrichtung und aufweist
eine Vielzahl von Paaren von diskontinuierlichen NFC-Schaltungssegmenten (51), und
eine entsprechende Schaltanordnung (55), die konfiguriert ist zum selektiven Koppeln jedes Paares von diskontinuierlichen NFC-Schaltungssegmenten, um eine NFC-Kommunikation mit der NFC-Vorrichtung herzustellen.

2. Das mobile drahtlose Kommunikationssystem gemäß Anspruch 1, wobei jedes Paar von diskontinuierlichen NFC-Schaltungssegmenten ein Paar von diskontinuierlichen Leiterbahnen (51") aufweist.

3. Das mobile drahtlose Kommunikationssystem gemäß Anspruch 1, wobei jedes Paar von diskontinuierlichen NFC-Schaltungssegmenten ein Paar von diskontinuierlichen NFC-Antennensegmenten (51') aufweist.

4. Das mobile drahtlose Kommunikationssystem gemäß Anspruch 1, wobei die zumindest eine Schaltanordnung weiter zumindest eine NFC-Steuervorrichtung aufweist.

5. Das mobile drahtlose Kommunikationssystem gemäß Anspruch 4, wobei die zumindest eine Schaltanordnung eine Vielzahl davon aufweist; und wobei die zumindest eine NFC-Steuervorrichtung eine jeweilige NFC-Steuervorrichtung (56) für jede Schaltanordnung aufweist und eine andere Funktion damit assoziiert hat.

6. Das mobile drahtlose Kommunikationssystem gemäß Anspruch 1, wobei die angrenzende NFC-Vorrichtung weiter ein Substrat (52) aufweist, das die Vielzahl von Paaren von diskontinuierlichen NFC-Schaltungssegmenten und die zumindest eine Schaltanordnung trägt.

7. Das mobile drahtlose Kommunikationssystem gemäß Anspruch 1, wobei die angrenzende NFC-Vorrichtung ein Transportgehäuse (131) aufweist, das konfiguriert ist zum Tragen der mobilen drahtlosen Kommunikationsvorrichtung.

8. Das mobile drahtlose Kommunikationssystem gemäß Anspruch 7, wobei die NFC-Kommunikationsschaltung in dem Transportgehäuse eingebettet ist und wobei die zumindest eine Schaltanordnung durch eine exponierte Oberfläche des Transportgehäuses getragen wird.

9. Ein Zubehörteil für eine angrenzende mobile drahtlose Kommunikationsvorrichtung (32), die aufweist ein tragbares Gehäuse (33), einen drahtlosen Transceiver (34), der durch das tragbare Gehäuse getragen wird, einen Prozessor (35), der durch das tragbare Gehäuse getragen wird und mit dem drahtlosen Transceiver gekoppelt ist, und eine Nahfeldkommunikation(NFC - near-field communication)-Vorrichtung (40), die mit dem Prozessor gekoppelt ist, wobei das Zubehörteil aufweist:
eine Vielzahl von Paaren von diskontinuierlichen NFC-Schaltungssegmenten (51); und
eine entsprechende Schaltanordnung (55), die konfiguriert ist zum selektiven Koppeln jedes Paares von diskontinuierlichen NFC-Schaltungssegmenten, um eine direkte NFC-Kommunikation mit der NFC-Vorrichtung herzustellen.

10. Das Zubehörteil gemäß Anspruch 9, wobei jedes Paar von diskontinuierlichen NFC-Schaltungssegmenten ein Paar von diskontinuierlichen Leiterbahnen (51") aufweist.

11. Das Zubehörteil gemäß Anspruch 9, wobei jedes Paar von diskontinuierlichen NFC-Schaltungssegmenten ein Paar von diskontinuierlichen NFC-Antennensegmenten (51') aufweist.

12. Das Zubehörteil gemäß Anspruch 9, wobei die zumindest eine Schaltanordnung eine Vielzahl davon aufweist; und wobei die zumindest eine NFC-Steuervorrichtung eine jeweilige NFC-Steuervorrichtung (41) für jede Schaltanordnung aufweist und eine andere Funktion damit assoziiert hat.

13. Das Zubehörteil gemäß Anspruch 9, das weiter ein Substrat (52) aufweist, das die Vielzahl von Paaren von diskontinuierlichen NFC-Schaltungssegmenten und die zumindest eine Schaltanordnung trägt.

14. Das Zubehörteil gemäß Anspruch 9, das weiter ein Gehäuse (149) aufweist, das ein Transportgehäuse (131) definiert, das konfiguriert ist zum Tragen der mobilen drahtlosen Kommunikationsvorrichtung.

15. Ein Verfahren zum Herstellen einer NFC-Kommunikation mit einer mobilen drahtlosen Kommunikationsvorrichtung (32), die aufweist ein tragbares Gehäuse (33), einen drahtlosen Transceiver (34), der durch das tragbare Gehäuse getragen wird, einen Prozessor (35), der durch das tragbare Gehäuse getragen wird und mit dem drahtlosen Transceiver gekoppelt ist, und eine Nahfeldkommunikation(NFC - near-field communication)-Vorrichtung (40), die mit dem Prozessor gekoppelt ist, wobei das Verfahren aufweist:
Verwenden einer angrenzenden NFC-Vorrichtung zum direkten Kommunizieren mit der mobilen drahtlosen Kommunikationsvorrichtung durch Betrieb einer entsprechenden Schaltanordnung (55) zum selektiven Koppeln jedes Paares einer Vielzahl von Paaren von diskontinuierlichen NFC-Schaltungssegmenten, um eine NFC-Kommunikation mit der NFC-Vorrichtung herzustellen.

## Revendications

1. Système de communication mobile sans fil (30) comprenant :
un dispositif de communication mobile sans fil (32) comprenant :
un boîtier portatif (33) ;
un émetteur-récepteur sans fil (34) porté par ledit boîtier portatif ;
un processeur (35) porté par ledit boîtier portatif et couplé audit émetteur-récepteur sans fil ; et
un dispositif de communication en champ proche, NFC pour « *Near Field Communication* », (40) couplé audit processeur ;
un dispositif NFC voisin (31) configuré pour communiquer directement avec ledit dispositif de communication mobile sans fil et comprenant :
une pluralité de paires de segments de circuit NFC discontinus (51) ; et
un ensemble de commutateurs respectifs (55) configuré pour coupler sélectivement chaque paire de segments de circuits NFC discontinus afin d'établir la communication NFC avec ledit dispositif NFC.

2. Système de communication mobile sans fil selon la revendication 1, dans lequel chaque paire de segments de circuits NFC discontinus consiste en une paire de pistes conductrices discontinues (51").

3. Système de communication mobile sans fil selon la revendication 1, dans lequel chaque paire de segments de circuits NFC discontinus consiste en une paire de segments d'antenne discontinus (51').

4. Système de communication mobile sans fil selon la revendication 1, dans lequel ledit au moins un ensemble de commutateurs comprend en outre au moins un contrôleur NFC.

5. Système de communication mobile sans fil selon la revendication 4, dans lequel ledit au moins un ensemble de commutateurs comprend une pluralité de ceux-ci et dans lequel ledit au moins un contrôleur NFC comprend un contrôleur NFC (56) respectif pour chaque ensemble de commutateurs, possédant une fonction différente qui lui est associée.

6. Système de communication mobile sans fil selon la revendication 1, dans lequel ledit dispositif NFC voisin comprend en outre un substrat (52) portant ladite pluralité de paires de segments de circuit NFC discontinus et ledit au moins un ensemble de commutateurs.

7. Système de communication mobile sans fil selon la revendication 1, dans lequel ledit dispositif NFC voisin comprend un boîtier de transport (131) configuré pour porter ledit dispositif de communication mobile sans fil.

8. Système de communication mobile sans fil selon la revendication 7, dans lequel ladite circuiterie de communication NFC est intégrée dans ledit boîtier de transport et dans lequel ledit au moins un ensemble de commutateurs est porté par une surface exposée dudit boîtier de transport.

9. Accessoire pour un dispositif de communication mobile sans fil (32) voisin comprenant un boîtier portatif (33), un émetteur-récepteur sans fil (34) porté par le boîtier portatif, un processeur (35) porté par le boîtier portatif et couplé à l'émetteur-récepteur sans fil et un dispositif de communication en champ proche, NFC, (40) couplé au processeur, l'accessoire comprenant :
une pluralité de paires de segments de circuit NFC discontinus (51) ; et
un ensemble de commutateurs respectifs (55) configuré pour coupler sélectivement chaque paire de segments de circuits NFC discontinus afin d'établir la communication NFC avec le dispositif NFC.

10. Accessoire selon la revendication 9, dans lequel chaque paire de segments de circuits NFC discontinus consiste en une paire de pistes conductrices discontinues (51").

11. Accessoire selon la revendication 9, dans lequel chaque paire de segments de circuits NFC discontinus consiste en une paire de segments d'antenne discontinus (51').

12. Accessoire selon la revendication 9, dans lequel ledit au moins un ensemble de commutateurs comprend une pluralité de ceux-ci et dans lequel ledit au moins un contrôleur NFC comprend un contrôleur NFC (41) respectif pour chaque ensemble de commutateurs, possédant une fonction différente qui lui est associée.

13. Accessoire selon la revendication 9, comprenant en outre un substrat (52) portant ladite pluralité de paires de segments de circuit NFC discontinus et ledit au moins un ensemble de commutateurs.

14. Accessoire selon la revendication 9, comprenant en outre un boîtier (149) définissant un étui de transport (131) configuré pour porter le dispositif de communication mobile sans fil.

15. Procédé d'établissement d'une communication NFC avec un dispositif de communication mobile sans fil (32) comprenant un boîtier portatif (33), un émetteur-récepteur sans fil (34) porté par le boîtier portatif, un processeur (35) porté par le boîtier portatif et couplé à l'émetteur-récepteur sans fil et un dispositif de communication en champ proche, NFC pour « *Near Field Communication* », (40) couplé au processeur, le procédé comprenant les étapes consistant à :
utiliser un dispositif NFC voisin pour communiquer directement avec le dispositif de communication mobile sans fil en faisant fonctionner un ensemble de commutateurs respectifs (55) afin de coupler sélectivement chaque paire parmi une pluralité de paires de segments de circuits NFC discontinus afin d'établir la communication NFC avec le dispositif NFC.
